# EUROPEAN PATENT APPLICATION

(11) **EP 0 557 236 A1**
(43) Date of publication of application: **25.08.1993**
(21) Application number: 93600008.2
(22) Date of filing: 15.02.1993
(51) Int. Cl.: A01D 46/26

(54) **Vibration type olive harvester with controllable amplitude frequency and power of the jolts on branches of trees**

(30) Priority: 17.02.1992 GR 92010061
(71) Applicant: Fieros, Victor, GR-272 00 Amaliada (GR)
(72) Inventor: Fieros, Victor, GR-272 00 Amaliada (GR)

(57) **Abstract**

The present invention concerns a machine for the harvesting of olives with a shaking action mechanism (8) on individual branches of the tree, and this mechanism includes a grabbing action system of opposing jaws at the end of a cylinder (28) which matchingly fits over a rod (18) of a hydraulic cylinder (9) which can direct rod (18) to a branch of a tree. Between cylinder (28), and a fixed point on rod (18) there is a strong pressure spring (25) which reacting to the pull movements of cable (10̸),which is directly connected to mechanism (8), and which pull movements have controllable amplitude, frequency and power, gives the appropriate push movement of spring (25) of mechanism (8).

## Description

The present invention concerns a machine for harvesting olives, or a similar type crop, such as almonds, or any other crop whose harvesting requires a shaking action.

There are vibration type harvesters of trees, and of branches of trees, and the present invention is of branches of trees.

There are vibration type harvesters of branches of trees, with complicated and expensive hydraulic mechanisms, and which have as a rule a very small maximum amplitude, and which are effective only on a few properly pruned trees.

The present invention uses an oscillating movement from a framework which is connected to a tractor, in such a way that it can use the power of the tractor through the "power take off" (P.T.O.) of the tractor, and the hydraulics of the tractor, for its energy needs, and the weight of the tractor for stability.

The main characteristics of this invention is that it can give an oscillating movement to a branch of a tree, with the amplitude, the frequency and the force of the movement to be controllable at any instant.

The invention will be described with reference to the accompanying drawings in which:

Figure 1. illustrates diagrammatically a side view of the apparatus.

Figure 2. illustrates diagrammatically a side view of the mechanism of this apparatus.

The invention of an apparatus consisting of a framework attached preferably to the rear end of a tractor, and connected with the hydraulics of the tractor, and with the power of the tractor through the "P.T.O." of the tractor there is a crankshaft arrangement (5), which is connected through a strong connecting-rod, (6) to a lever-type oscillating mechanism, (1), and with a pulley, (11), fixed at a point on this lever-type oscillating mechanism, (1), so that as the crankshaft turns, pulley (11) oscillates.

It is of course possible for this oscillating movement of pulley (11) to be accomplished by other ways, but this way, (the lever type), gives the possibility to enhance the pull movement by use of tension springs, (7) which are attached to the lever of the lever-type oscillating mechanism, and they tension on the idle (return) phase of the oscillating movement of the pulley (11), thus giving a smoother oscillating movement, and also reduces the power requirements of the engine that turns the P.T.O. shaft.

A flexible cable (10̸), around pulley (11) connects a cylinder (3), with a fastening mechanism, (), onto a branch of the tree.

The cylinder (3), around which there are enough turns of cable (10̸), to enable mechanism (8) to be at different distances from cylinder (3).

Cylinder (3) has got a locking device which enables it to take the slack of cable (10̸), between cylinder (3) and mechanism (8), and also this locking device enables the pulling movement of cable (10̸) to take place at the other end of cable (10̸), which is fixed to jaw (26) of the fastening mechanism (8).
(9), is a hydraulic cylinder, with rod (18), and at the end of rod (18), the fastening mechanism (8), is attached, and this mechanism (8) consists of two opposing jaws, (26) and (27), with soft surfaces so as to grab the branches and not damage them. Mechanism () also consists of a cylinder, (28), and one of the jaws, (27), through a hinge, is fixed at one of the openings of cylinder, (28), and the other opening of the cylinder matchingly fits over rod (18), and cylinder (28) can turn round rod (18), and can also move backwards and forwards on rod (18), and between a fixed point on cylinder (28), and another fixed point on rod (18) there is a strong pressure spring, (25), which reacting to the pull movements of cable (10̸), makes it possible for cylinder (28) to oscillate. The pressure spring (25) may be inside cylinder (2), and is pressed between the inside surface of jaw (27), and the end of rod (1).

Jaw (26), which acts as a hook, is directly connected with cable (10̸), and all the pull movements of cable (10̸) are done through jaw (26), which is connected with cylinder (2) through a rod and sleeve arrangement, with the sleeve (29), being joined to cylinder (28) on its longitudinal axis, and with the rod being part of jaw (26), being able to move only "forward and backwards" inside sleeve (29), (due to the shape of the sleeve, and the tight fit to this shape of the rod), so that jaw (26) can move towards, and away from jaw (27). The two jaws, (26) and (27), through hinges are able to grab tightly onto branches of trees, irrespective of the inclination of the branches.

Cylinder (9), is connected through a pin-joint (13) to a rod, (14), which, rod (14), can only turn round inside a cylinder (12), and with cylinder (12) attached with its longitudinal ax.is vertical, to an elevated point on the framework.

For the vertical movements of the hydraulic cylinder (9), and thus of the fastening mechanism (8), there is a hydraulic cylinder (35), fixed at the opposite side of rod (14) from the side of cylinder (9), so that, as the rod of cylinder (35) moves forward, cylinder (9), moves up. For the horizontal movement of hydraulic cylinder (9), there can be another hydraulic cylinder attached to the rod (14).

The flexible cable (10̸), at one end is fixed to cylinder (3), and consequently goes round pulley (11), and continues round pulley (4), and which turns in the same vertical plane as that of pulley (11). At one, or both sides of pulley (11), there is one or two pulleys, (2) and (10̸2) which turn in the same vertical plane as that of pulley (11), and these two pulleys control the amplitude of the shaking movement of cable (10̸). (The action of these two pulleys will be analysed further on).

It must be here noted that all the pulleys round which cable (10̸) passes, have jot a "V" shaped groove. After pulley (4), the cable (10̸) goes through a system of pulleys (20̸), which comprises two pulleys (21) and (22), with parallel turning axis, and with their < shaped circumferences forming a "diamond" <> shaped opening.

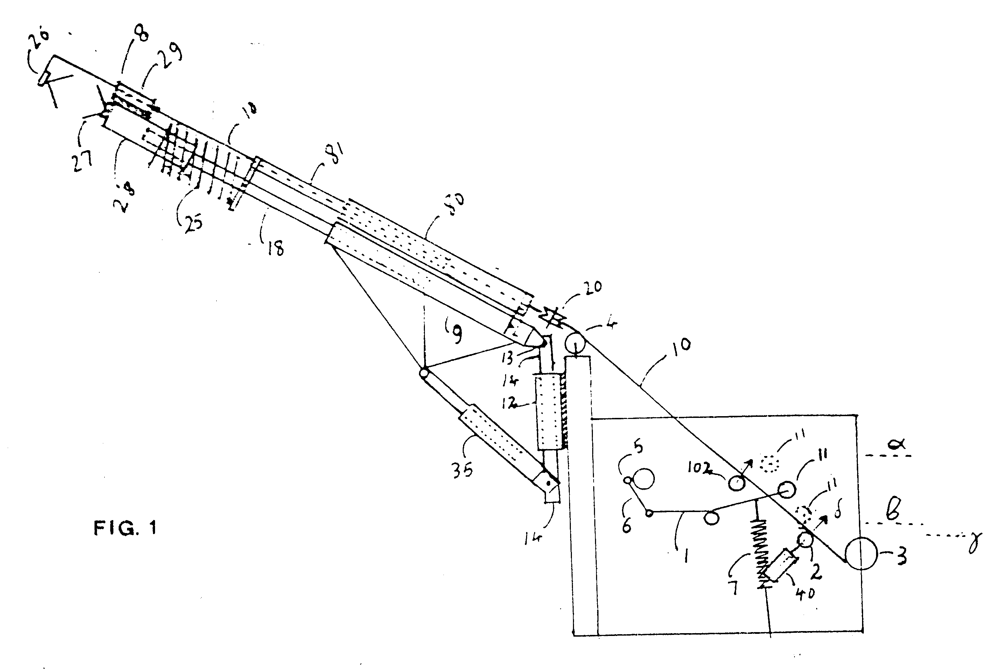

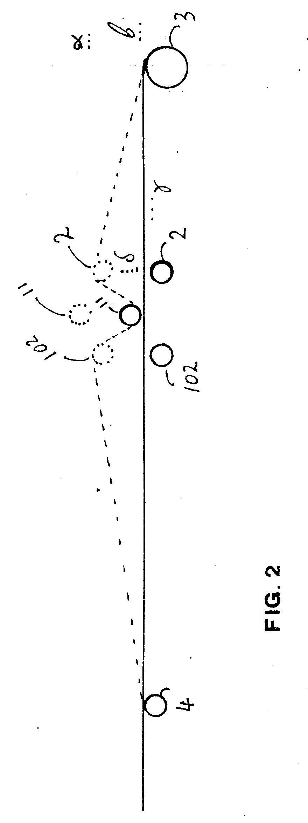

Preferably the two axis of system (20̸) are in the same vertical surface as that of rod (14), when cylinder (9) is in the horizontal position, and with the "<>" opening of the pulleys (21) and (22) being over rod (14). The mechanism of this invention that can produce a shaking movement on a branch of a tree, and with the amplitude, the frequency and the force of the movement controllable by the operator, at will, and at any instant, is achieved with a fastening mechanism (8), fastened on to a branch of a tree, and which fastening mechanism (8) is also the oscillating mechanism, and this mechanism recieves its energy from a flexible cable (10̸), with oscillating pull movements, and these movements are the result of cable (10̸), without any slack, going round an oscillating pulley (11), and with the other end of cable (10̸) being locked with cylinder (3) and with the energy section of the movement of oscillating pulley (11) being from "a" to "β", Figures 1 and 2, and at this energy section the pull movement of cable (10̸) pulls the branch via the jaw (26), and at the sane time compresses the spring (25) of mechanism (8), so that at the return section of the pulley (11), from "β" to "a", the spring (25) pushes back the fastening mechanism (8), and thus the branch, for the beginning of another pull movement. For a simple explanation as to how pulley (11) produces the pull movements of cable (10̸), and with controllable amplitude, when oscillating pulley (11) is at point "a", the beginning of the energy phase of its movement, and with pulley (2), which is connected to a rod of a hydraulic cylinder (40̸) is a position "y", and with cable (10̸) locked onto cylinder (3), and tensioned, without any slack, the length of cable (10̸) from cylinder (3) to pulley (4) is the same irrespective as to whether the oscillating pulley (11) is at point "a" or point "β" or anywhere in between, and so there is no movement of cable (10̸) while pulley (11) oscillates, but when pulley (2) is in position "δ" that is a movement of pulley (2) towards position "a", and now as oscillating pulley (11) moves from position "a" to "β", the energy phase, at some point from "a to "β" when the cable (10̸) starts to turn round pulley (11) and pulley (2), the length of cable (10̸) from pulley (4) to locked cylinder (3) will start to become bigger till pulley (11) reaches position "β", and this difference, as cylinder (3) is locked, is the amplitude of the pull movement of cable (10̸) on system (8), and as position "δ" of pulley (2), approaches the plane of position "a", and cable (10̸) starts earlier in the energy phase of pulley (11) to go round pulley (11) and pulley (2), so will the amplitude of the pull movement of cable (10̸) on the system (8) be bigger, and with the maximum amplitude being with cable (10̸) being round pulleys (1) and (2) at the beginning of the energy phase of pulley (11).

It is possible with the introduction of another pulley, (10̸2), at the other side of pulley (11), and with the same reasoning as with pulley (2), to have three different "maximum" amplitudes of the pull movements of cable (10̸), one with the use of only pulley (10̸2), another with the use of only pulley (2), and a third with the use of both pulleys, (10̸2) and (2), and of course this last amplitude will be the absolute maximum.

As for the jolts: Looking at fastening mechanism (8), Figures 1 & 2, the more the compression spring (25) is compressed, the more the "push" reaction on the branch of the tree, and the power of this push reaction can easily be regulated, irrespective of the amplitude of movement, with rod (18), of hydraulic cylinder (9), to be moved forward for greater push reaction, (greater power), and the reason being, that rod (18) will thus compress the spring (25) against cable (10̸), whose one end is locked with cylinder (3), and the other is directly connected to jaw (26). (The spring (25) must have enough extra compression movement to accommodate the maximum amplitude that may be required).
(80̸) and (81) consist of telescopic rectangular sections that act as a sheath through which cable (10̸) gasses. It is also used to combat the fore of gravity of rod (18) and mechanism (8) as they move forward.

## Claims

1. A machine that produces a shaking action on branches of trees, with pull and push movements, and with the push movements being induced by the pull movements, and with the amplitude of these pull movements to be controlled at any instant.
This mechanism, for the control of the amplitude of the pull movements, uses a pulley (1) that oscillates from "a" to "β", and with the use of one or two pulleys (2) and (10̸2), one at each side of the oscillating pulley (11), and these two pulleys move in the same surface as the oscillating pulley (11), and between planes "a" and "β", and with the use of a flexible cable (10̸), locked and unable to move at one end to cylinder (3), and with the other end fixed onto a branch of a tree, through the hook-like jaw (26) of mechanism (8), after first passing through the surface area of the oscillating pulley (11) and at zero amplitude, the cable (10̸), and pulleys (2) and (10̸2) are outside the oscillation area of oscillating pulley (11), and as pulley (11) pushes the cable (10̸) between the two pulleys (2) and (10̸2), the pull movements of cable (10̸) start, and the further the pulleys (2) and (10̸2) push the cable towards the beginning of the oscillating movement of pulley (11), that is nearer to position "a", the greater the amplitude of the pull movement.

2. A mechanism according to Claim 1. and which through cable (10̸) which is directly connected to a branch of a tree through hook-like jaw (26) of fastening system (8), and with jaw (27), opposite to jaw (26), and together these two jaws can grab onto a branch of a tree, and through hinges at the base of these jaws, enables the grabbing action of these jaws to align itself with the branches to be shaken. Jaw (27) is directly connected to a compression spring (25) through a cylinder (2), which fits matchingly over the end of a rod (18) of hydraulic cylinder (9), and which cylinder (9) can direct the rod (18), and conseqently the mechanism (8) from branch to branch of the tree, and between a fixed point on rod (18), and a fixed point on cylinder (28), compression spring (25) may be compressed by the action of rod (18) moving forward, or by the action of cable 10̸) pulling.
The spring (25), which reacting to the pull movements of cable (10̸) gives the push part of the oscillation of mechanism (8).
